# FASCICULE DE BREVET EUROPEEN

(11) **EP 4 100 905 B1**
(45) Date de publication et mention de la délivrance du brevet: **05.11.2025**
(21) Numéro de dépôt: 20819875.4
(22) Date de dépôt: 23.11.2020
(51) Int. Cl.: G06Q 30/02, G06Q 30/0201, G06Q 30/0241, H04L 67/02

(54) **PLATEFORME DE GESTION DES PRÉFÉRENCES EN MATIÈRE DE DONNÉES PERSONNELLES**
PLATTFORM ZUR VERWALTUNG PERSÖNLICHER DATENPRÄFERENZEN
PLATFORM FOR MANAGING PERSONAL DATA PREFERENCES

(30) Priorité: 07.02.2020 FR 2001210
(43) Date de publication de la demande: 14.12.2022
(73) Titulaire: ID Side, 60260 LAMORLAYE (FR)
(72) Inventeur: ROQUES-BONNET, Marie-charlotte, Emilie, 60260 LAMORLAYE (FR)
(74) Mandataire: Khatab, Abdelaziz
(86) Numéro de dépôt international: PCT/IB2020/061034
(87) Numéro de publication internationale: WO 2021/156664

(56) Documents cités:
- US-A1- 2009 271 261
- US-A1- 2012 023 547

## Description

### DOMAINE TECHNIQUE DE L'INVENTION

La présente invention concerne le domaine des communications en ligne. Plus particulièrement elle concerne la protection des données personnelles des utilisateurs de réseaux de communication tels qu'internet par exemple.

### ARRIERE-PLAN TECHNIQUE

Lorsqu'un utilisateur accède à des services en ligne, par exemple sur internet, il est confronté à la difficulté de contrôler l'utilisation que font ces services de ses données personnelles.

Le contrôle de ces données se heurte à la tâche fastidieuse d'exprimer des choix en la matière pour chaque service utilisé (par exemple sur chaque site internet visité). La possibilité d'exprimer de tels choix n'est d'ailleurs pas toujours offerte. Lorsqu'elle l'est, les choix peuvent être limités, mal exprimés ou complexes pour une compréhension rapide et efficace.

Pour répondre à ce problème, plusieurs approches ont été proposées. Par exemple, les modules de navigation sur internet (communément appelés *« navigateurs* ») permettent à un utilisateur d'autoriser ou de bloquer les témoins de connexion (communément appelés « *cookies* »), soit de manière générale, soit au cas par cas. Cette autorisation (ou interdiction) a pour but de contrôler de manière précise le traçage effectué par les sites internet visités. Cependant, en pratique, cette méthode se heurte à une grande difficulté d'utilisation. Par exemple, un blocage général des cookies rend la navigation de beaucoup de sites internet impossible. Par exemple encore, un blocage au cas par cas nécessite un niveau d'expertise avancé et est très fastidieux car il faut gérer chaque cookie individuellement et faire un choix en fonction de ses finalités.

Par exemple encore, il existe des extensions de navigateurs internet qui visent à limiter le traçage en ligne des utilisateurs en bloquant les sites internet et les témoins de connexion qui semblent pister l'utilisateur. Ces extensions utilisent diverses méthodes heuristiques plus ou moins efficaces mais qui interfèrent parfois avec le fonctionnement des sites internet visités.

Des normes ont par ailleurs été définies par le « *World Wide Web Consortium »* (W3C). En 2015, le W3C a développé une norme permettant aux utilisateurs de navigateurs de signaler aux sites visités s'ils acceptent d'être tracés ou non, en donnant un moyen d'exprimer une forme de consentement sur le traçage sur internet, indépendamment de la technologie utilisée. Cette norme n'a cependant pas rencontré un grand succès et on considère aujourd'hui qu'elle est abandonnée.

Avant cela, en 2002, le W3C avait déjà proposé une autre norme, dite « *P3P »* (acronyme de *« Platform for Privacy Preferences Project* ») permettant aux sites internet d'informer les utilisateurs de leurs intentions concernant l'utilisation de leurs données personnelles. Cette approche ne permet cependant pas aux utilisateurs d'exprimer un choix sur le traitement des données. Elle permet uniquement de les informer. Cette norme est aussi considérée comme obsolète.

Il apparait donc que bien que la protection et le traitement des données personnelles soit aujourd'hui un enjeu majeur dans le domaine des communications électroniques sur les réseaux, les solutions pour permettre aux utilisateurs de les contrôler efficacement ne sont pas satisfaisantes. Le document US 2009/271261, 29 octobre 2009 (2009-10-29), décrit un système et un procédé pour fournir de la publicité ciblée aux utilisateurs basée sur leurs préférences, utilisant des dispositifs d'accès réseau (NADs) pendant des événements de diffusion spécifiés.

L'ensemble des approches précédemment mentionnées ne s'attaque qu'a un seul problème, celui du pistage en ligne, mais ne touchent pas aux autres types d'utilisation des données personnelles de l'utilisateur.

Ainsi, il existe un besoin pour améliorer le contrôle par les utilisateurs de leurs données personnelles par les services en ligne. La présente invention s'inscrit dans ce contexte.

### RESUME DE L'INVENTION

Un **premier aspect de l'invention** concerne un procédé de communication sur un réseau pour l'accès par un système client à un service sur un système distant comprenant les étapes suivantes :
réception de données, de la part d'un système de gestion de données personnelles d'utilisateurs, lesdites données comprenant au moins une définition d'au moins un choix d'un utilisateur pour le traitement de données personnelles associées à l'utilisateur, ladite au moins une définition étant associée à un identifiant de l'utilisateur,
transmission d'une requête de connexion audit serveur distant comprenant au moins ladite définition associée audit identifiant de l'utilisateur,
établissement d'une première communication entre ledit système client et ledit système distant pour la fourniture dudit service en fonction d'une réponse dudit système distant à ladite définition, et
établissement d'une deuxième communication de la part dudit système distant avec ledit système client, ladite deuxième communication étant autorisée par ledit système de gestion, sur la base de ladite définition.

Selon des modes de réalisation, le procédé comporte en outre la génération, à partir dudit identifiant de l'utilisateur, d'un identifiant chiffré, et dans la requête de connexion audit serveur distant, ladite définition est associée audit identifiant chiffré.

Selon des modes de réalisation, ledit système de gestion :
génère ledit identifiant ainsi qu'une clé cryptographique pour la génération de l'identifiant chiffré,
reçoit ledit au moins un choix de l'utilisateur pour le traitement de ses données personnelles lors d'une communication avec le système client, et
enregistre ladite au moins une définition.

Selon des modes de réalisation, ledit système distant transmet audit système de gestion une proposition de deuxième communication associée audit identifiant chiffré, et
ledit système de gestion détermine l'utilisateur à qui est destinée la dite deuxième communication à partir dudit identifiant chiffré.

Selon des modes de réalisation, ladite deuxième communication est établie directement entre le système de gestion et le système client.

Selon des modes de réalisation, ladite deuxième communication est établie entre le système distant et le système client.

Selon des modes de réalisation, ladite au moins une définition est stockée au sein d'un module client de gestion des données personnelles accessible au système client.

Selon des modes de réalisation, ladite au moins une préférence est reçue de la part du système de gestion et dans lequel ledit stockage comporte une mise en forme de ladite au moins une préférence pour sa transmission au système distant.

Selon des modes de réalisation :
ledit système distant analyse ladite requête de connexion pour accepter ou non ladite au moins une définition et transmettre ladite réponse, et
ledit module de gestion des données personnelles affiche ladite réponse pour l'utilisateur.

Un **deuxième aspect de l'invention** concerne un dispositif de communication comprenant une unité de traitement configurée pour la mise en œuvre d'étapes selon le procédé selon le premier aspect.

Un **troisième aspect de l'invention** concerne un système de communication comportant :
un système client,
un système distant, et
un système de gestion des données personnelles d'un utilisateur du système client utilisant ledit système client pour accéder à un service sur ledit système distant,
dans lequel le système client, le système distant et le système de gestion sont configurés pour mettre en œuvre un procédé selon le premier aspect.

### FIGURES

[Fig. 1] La figure 1 illustre l'accès classique à un service en ligne sur un réseau.
[Fig. 2] La figure 2 illustre l'accès classique à plusieurs services en ligne sur un réseau.
[Fig. 3] La figure 3 illustre une plateforme selon des modes de réalisation.
[Fig. 4] La figure 4 illustre des avantages apportés par des modes de réalisation de l'invention.
[Fig. 5] La figure 5 illustre schématiquement un identifiant chiffré de l'utilisateur selon des modes de réalisation.
[Fig. 6] La figure 6 illustre schématiquement des communications mises en œuvre selon des modes de réalisation.
[Fig. 7] La figure 7 illustre schématiquement un dispositif selon des modes de réalisation.

### DESCRIPTION DETAILLEE DE L'INVENTION

Dans ce qui suit, des modes de réalisation sont décrits qui offrent aux utilisateurs de services en ligne des moyens de définir et de de communiquer leurs choix concernant le traitement de leurs données à caractère personnel lorsqu'ils utilisent des communications électroniques, par exemple lorsqu'ils visitent des sites internet ou utilisent des services en ligne sur des réseaux.

Ces modes de réalisation permettent aussi aux fournisseurs de services en ligne ou de sites internet d'adapter leurs communications aux choix des utilisateurs. Ils peuvent ainsi leur communiquer des informations plus pertinentes et plus respectueuses de leurs choix, telles que par exemple des offres commerciales/promotionnelles.

Comme cela est décrit dans ce qui suit, une plateforme intervient comme intermédiaire de confiance entre l'utilisateur et les services qu'il utilise pour gérer ses choix en matière de traitement de ses données personnelles.

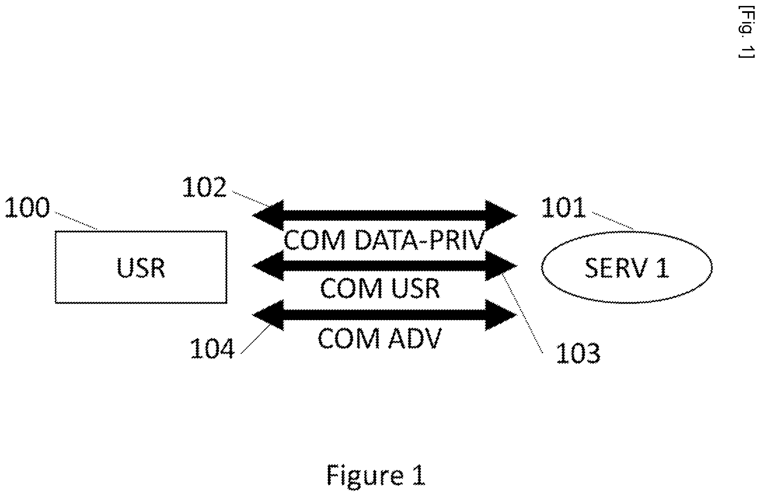

Cette plateforme permet de grandement simplifier les communications entre l'utilisateur et les fournisseurs de service qu'il utilise. La **figure 1** illustre l'accès classique à un service en ligne sur un réseau (par exemple internet). Un utilisateur d'un système client **100** (par exemple un ordinateur personnel, une tablette, un smartphone ou autre) accède via un réseau (non représenté) à un service en ligne mis en œuvre par un système distant **101** (par exemple un serveur).

De manière classique, un grand nombre de communications différentes sont réalisées. Premièrement, le service en ligne va enclencher un certain nombre de communications **102** (COM DATA-PRIV) visant à déterminer les choix de l'utilisateur en matière de données personnelles. Par exemple, le serveur va présenter la politique mise en œuvre par le service en ligne en matière de cookies ou de traçage de la navigation sur le site etc. Le serveur peut subordonner l'utilisation du service à l'acceptation de certaines conditions ou demander à l'utilisateur de faire des choix dans une liste d'options de navigation possibles. Ensuite, la communication **102** (COM USR) entre le système distant **101** et le système client **100** va se poursuivre pour fournir le service demandé en fonction des choix exprimés lors de la première phase de communication **102.** Durant cette deuxième phase de communication **103** ou postérieurement à cette phase de communication, une troisième phase de communication **104** (COM ADV) peut se mettre en place visant par exemple à faire des offres commerciales (ou autre) à l'utilisateur. Cette troisième phase de communication va aussi avoir lieu en fonction des choix fait par l'utilisateur lors de la première phase de communication **102**. Si l'utilisateur n'a pas pris le soin de faire les choix adéquats lors de la première phase **102,** il peut alors recevoir des offres inadéquates et cela peut perturber son utilisation du service sur le système distant **101**.

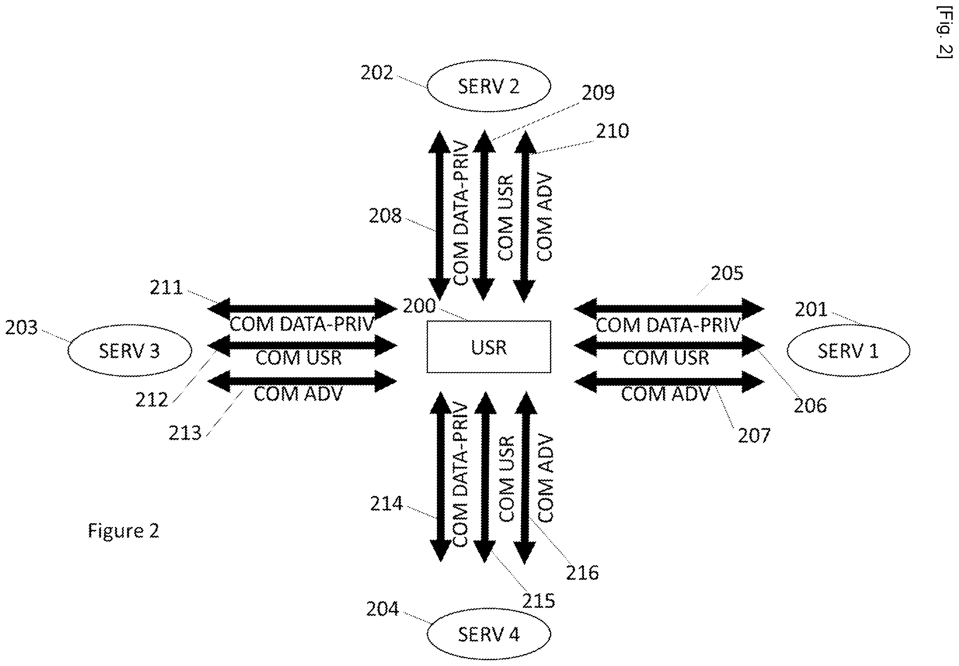

Ce mode de fonctionnement est très fastidieux et complexe à la fois pour l'utilisateur qui doit paramétrer son utilisation de chaque système distant à chaque accès, au risque, s'il ne le fait pas, de voir ses données personnelles utilisées de manière non souhaitée. Ce mode de fonctionnement est d'autant plus fastidieux qu'un utilisateur doit faire face au même processus pour chaque accès à chaque service différent qu'il utilise comme cela est illustré par la **figure 2****.**

La **figure 2** illustre un utilisateur qui utilise un système client **200,** pour communiquer via un réseau (non représenté) avec des systèmes distants **201, 202, 203, 204** (par exemple des serveurs) fournissant des services respectifs (SERV 1, SERV 2, SERV 3, SERV 4). Le processus décrit ci-avant doit alors être suivi pour l'accès par le système **200** à chaque système distant **201, 202, 203, 204.** Ainsi, trois phases de communication **205** (COM DATA-PRIV), **206** (COM USR), **207** (COM ADV) sont mises en œuvre entre le système **200** et le système **201**. Trois phases de communication **208** (COM DATA-PRIV), **209** (COM USR), **210** (COM ADV) sont mises en œuvre entre le système **200** et le système **202**. Trois phases de communication **211** (COM DATA-PRIV), **212** (COM USR), **213** (COM ADV) sont mises en œuvre entre le système **200** et le système **203**. Trois phases de communication **214** (COM DATA-PRIV), **215** (COM USR), **216** (COM ADV) sont mises en œuvre entre le système **200** et le système **204**.

Les paramétrages à effectuer sont alors démultipliés et on comprend ainsi pourquoi les choix en matière de protection des données personnelles sont souvent négligés. Cela est préjudiciable aux utilisateurs mais aussi aux fournisseurs de services qui ne peuvent pas assurer un bon niveau de satisfaction des utilisateurs lorsqu'ils utilisent leurs services.

Selon les modes de réalisation décrits ci-après, il est ainsi proposé à l'utilisateur d'accéder directement à une plate-forme centralisée de confiance (par exemple un serveur web), ou indirectement (par une application), ayant pour fonction de lui permettre de définir ses choix en matière d'utilisation de ses données personnelles en ligne.

La plateforme offre ainsi une interface qui permet à l'utilisateur de définir les finalités générales de l'utilisation de ses données en ligne. Il peut par exemple préciser s'il accepte ou non des publicités ciblées basées sur son comportement en ligne. Par exemple encore, il peut préciser s'il accepte de recevoir des promotions personnalisées par email, sms, ou toute autre forme de messagerie. Par exemple encore, il peut préciser qu'il accepte ou non d'être suivi en ligne pour des besoins statistiques et/ou de recherche. D'autres possibilités peuvent lui être offertes.

Cette plate-forme peut aussi avoir pour fonction d'offrir à l'utilisateur la possibilité, si nécessaire, d'affiner ses choix en fonction des entreprises qui pourraient souhaiter utiliser ses données personnelles. Il s'agit par exemple d'autoriser certains sites en ligne spécifiquement identifiés à utiliser les données personnelles de l'utilisateur pour des finalités particulières, en dérogation à une règle générale établie, ou au contraire, d'exprimer des restrictions supplémentaires pour des sites en ligne spécifiquement identifiés.

La plateforme de confiance peut ainsi centraliser l'ensemble des choix définis par l'utilisateur. L'utilisateur peut en outre à tout moment consulter, modifier ou supprimer ses choix sur cette plate-forme centralisée.

Comme il est décrit dans la suite, l'accès à ces données peut être protégé au moyen d'un mécanisme d'authentification propre à chaque utilisateur (comme par exemple un mot de passe).

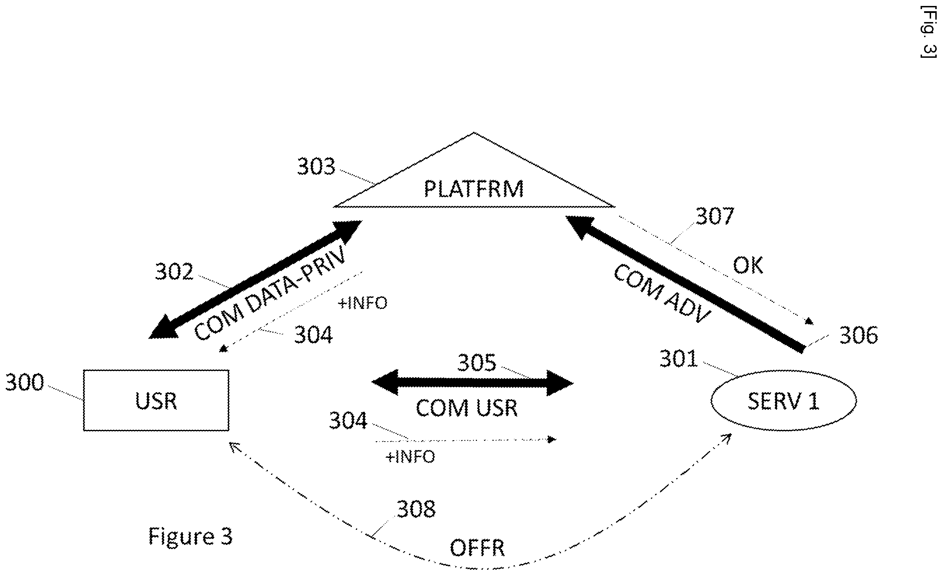

La **figure 3** illustre une plateforme selon des modes de réalisation. Un utilisateur accède, via un système client **300** (USR), à des services fournis par fournisseur de service, via un système distant **301,** par exemple un serveur (SERV 1), via un réseau non représenté.

Contrairement à ce qui se passe classiquement et ce qui a été présenté en référence à la **figure 1****,** l'utilisateur n'établit pas de communication visant à définir ses choix en matière de protection de ses données personnelles avec le système distant **301**. Il établit par contre une telle communication **302,** avec un autre système distant **303,** par exemple un serveur, qui met en œuvre une plateforme selon l'invention.

Lors de cette communication, l'utilisateur définit ses préférences en matière de protection de ses données personnelles. En retour, il reçoit un ensemble de données **304** (+INFO) qui lui permettront de communiquer ses préférences à des fournisseurs de service comme cela est décrit dans la suite. Par exemple, ces données peuvent aussi comporter un identifiant qui permet d'identifier l'utilisateur auprès de la plateforme. Par exemple encore, ces données peuvent comprendre une clé de chiffrement pour assurer la sécurité de son identité et de ses préférences comme cela est décrit dans ce qui suit.

Au moyen de ces informations **304,** l'utilisateur peut ensuite initier une communication **305** (COM USR) avec le système distant **301**. Lors de cette communication, ses préférences sont encodées de manière à ce que le système puisse à la fois établir la communication conformément aux choix de l'utilisateur et aussi de manière à permettre d'établir une communication **306** (COM ADV) avec le système distant **303**.

Cette communication **306** permet au fournisseur de service de faire par exemple des offres pour l'utilisateur. L'offre n'est donc pas faite directement à l'utilisateur. Elle transite par la plateforme qui va d'abord interroger l'utilisateur ou consulter les données concernées **304** qu'il aura renseignées à cet effet et qui sont stockées dans le système **303**. La plateforme va pouvoir reconnaître l'utilisateur à qui est destinée l'offre car le système **301** a reçu une identification basée sur les données **304** comme il est décrit par la suite. Si la plateforme autorise l'envoi de l'offre par un message **307** (OK), le système distant **301** entre alors en communication directe **308** (OFFR) avec l'utilisateur via son dispositif client **300**.

Selon des modes de réalisation pour la mise en œuvre d'un processus tel que décrit ci-avant, l'utilisateur installe par exemple une extension logicielle de son module de navigation en ligne (le "*navigateur*") présent sur son dispositif client **300** (ordinateur, tablette, smartphone ou autre). Par exemple, l'utilisateur s'identifie auprès de cette extension par le même mécanisme d'authentification qu'il a utilisé pour se connecter à la plateforme lors de la communication **302** (par exemple avec un login et un mot de passe). L'extension peut ensuite se connecter à la plateforme centralisée pour y télécharger les choix de l'utilisateur en matière d'utilisation de ses données personnelles en ligne (les données **304**).

Selon des modes de réalisation, l'extension peut aussi télécharger un identifiant unique de l'utilisateur (appelé IUU ci-après) et une clé de chiffrement cryptographique (appelée CC ci-après). Ces données peuvent servir à renforcer la sécurité des communications des données personnelles de l'utilisateur.

Lors des communications avec les fournisseurs de services (pages internet ou autre), le système client **300,** par exemple via l'extension logicielle, peut par exemple altérer les requêtes de contenus envoyées afin d'y insérer des éléments additionnels. Par exemple, il est possible d'ajouter un encodage des choix de l'utilisateur en matière d'utilisation de ses données personnelles en ligne. Par exemple encore, et de manière optionnelle, il est possible d'ajouter un identifiant chiffré de l'utilisateur qui change à chaque requête, ou à chaque groupe de requêtes. Cet identifiant chiffré est par exemple formé par un chiffrement cryptographique de l'IUU ainsi que d'autres informations comme décrit ci-après.

Par exemple, dans le cadre de communications par le protocole HTTP ou HTTPS, la transmission de ses données supplémentaires peut notamment se faire par l'ajout d'un *"en-tête HTTP"* (ou HTTPS) dédié à cette fonction, ou par un témoin de connexion ("*cookie"*) particulier.

Le service utilisé (par exemple un site web visité) peut alors lire les choix de l'utilisateur en matière d'utilisation de ses données personnelles en ligne par un processus automatisé. Le service peut dès lors adapter son comportement afin de respecter ces choix (tels qu'il les a définis ou mis à jour). A titre d'exemple, si l'utilisateur ne souhaite pas que ses données de navigation soient utilisées pour de la publicité ciblée, le service utilisé peut immédiatement bloquer cette forme de traitement de données personnelles, sans que cela ne nécessite de présenter une demande de consentement supplémentaire et fastidieuse à l'utilisateur.

Par exemple, le service utilisé peut notifier son acceptation des choix de l'utilisateur par un témoin d'acceptation qui est fourni dans la réponse à la requête de service. L'absence de témoin d'acceptation est par exemple considérée comme un refus de la part du fournisseur de service de considérer les choix de l'utilisateur.

L'extension logicielle du navigateur peut par exemple détecter la présence de ce témoin d'acceptation dans la requête et informer l'utilisateur du navigateur de la présence ou de l'absence de ce témoin d'acceptation dans la requête.

Les modes de réalisation permettent ainsi à l'utilisateur d'informer tous les services en ligne susceptibles d'être utilisés de ses choix en matière de traitement de données à caractère personnel, tels que ces choix ont été stockés précédemment dans la plateforme de confiance centralisée.

En outre, les modes de réalisation peuvent permettre aux services en ligne utilisés d'informer l'utilisateur qu'ils acceptent les choix exprimés par l'utilisateur.

La communication avec le fournisseur de service peut alors se faire en fonction de la réponse qu'il apporte aux choix de l'utilisateur.

Selon des réalisations de l'invention, il est ainsi possible d'offrir une information (telle que par exemple un identifiant chiffré) permettant par la suite aux services en ligne de faire des offres commerciales ou promotionnelles à des utilisateurs ciblés par l'intermédiaire de la plateforme de confiance centralisée, comme décrit ci-après.

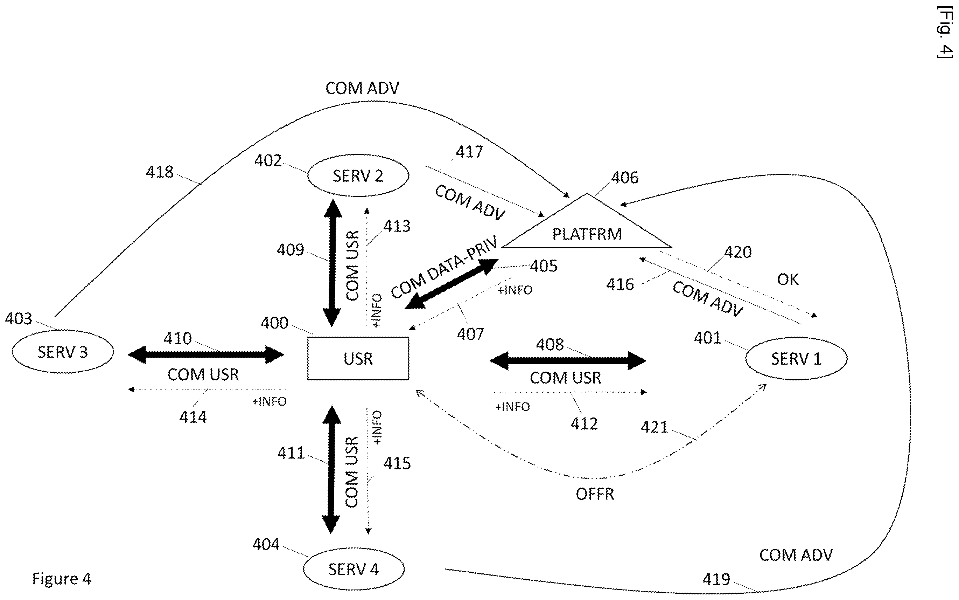

La **figure 4** illustre des avantages apportés par des modes de réalisation de l'invention. Elle représente un utilisateur qui utilise un système client **400** (USR), pour communiquer via un réseau (non représenté) avec des systèmes distants **401, 402, 403, 404** (par exemple des serveurs) fournissant des services respectifs (SERV 1, SERV 2, SERV 3, SERV 4). Comme selon l'invention, l'utilisateur configure ses préférences en matière de données personnelles au système distant **406** (PLATFROM) mettant en œuvre une plateforme centralisée de gestion de telles données dans une communication **405** (COM DATA-PRIV). En retour, il reçoit les informations **407** (+INFO) nécessaires pour les communiquer aux systèmes distants **401, 402, 403, 404,** lorsqu'il établit des communications respectives **408, 409, 410, 411** (COM USR) avec eux. Lors de ces communications, le système client fournit les données **412, 413, 414, 415** (+INFO) comprenant ses préférences. Optionnellement, il peut aussi fournir l'identifiant chiffré permettant aux systèmes distants de communiquer au système **406** des offres personnalisées.

Ainsi, au lieu d'établir quatre communications différentes pour établir ses préférences en matière de données personnelles, une seule communication **405** a été établie. En outre, les offres émises par les systèmes distants **401, 402, 403, 404** ne sont pas transmises au système **400**. Ces systèmes distants interrogent plutôt la plateforme mise en œuvre par le système **406** dans des communications **416, 417, 418, 419** (COM ADV).

Selon le mode de réalisation illustré, on suppose que seule l'offre du système **401** correspond aux préférences de l'utilisateur. Dans ce cas, la plateforme lui transmet un message **420** (OK) l'autorisant à contacter directement l'utilisateur dans une communication **421** (OFFR).

De manière optionnelle, lorsque le système client initie des communications avec les systèmes distants pour accéder à leurs services, il peut former un identifiant chiffré qui va, tout en garantissant l'anonymat de l'utilisateur, permettre aux systèmes distants de viser cet utilisateur auprès de la plateforme lorsqu'ils transmettent leurs offres. Par exemple, cet identifiant chiffré peut être généré par une extension telle que décrite ci-avant.

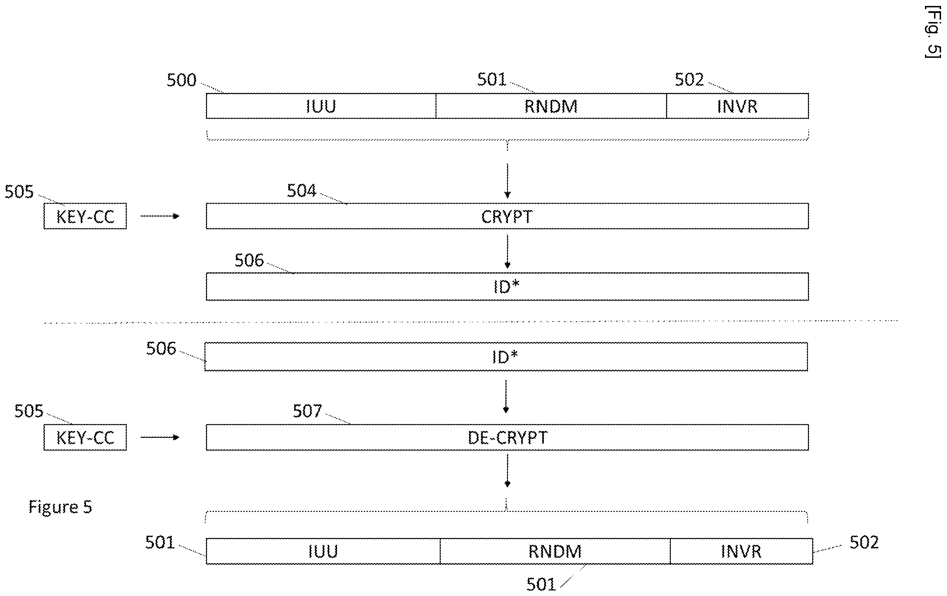

L'identifiant chiffré de l'utilisateur peut être formé de la manière illustrée par la **figure 5****.**

L'identifiant de l'utilisateur **500** (IUU) est concaténé avec un nombre aléatoire **501** (RNDM) cryptographiquement sûr qui change à chaque requête à un service en ligne (ou à chaque groupe de requêtes). Il peut aussi être concaténé avec une série de caractères prédéfinis et invariables **502** (INVR). Le nombre aléatoire est choisi dans un ensemble suffisamment grand pour qu'il soit en pratique extrêmement improbable qu'un même nombre aléatoire soit choisi deux fois par l'extension logicielle au cours de son utilisation (c'est ce que l'on appelle un *« nonce* » en cryptographie).

L'ensemble est chiffré lors d'une étape **504** avec un algorithme de chiffrement cryptographique, en utilisant une clé de chiffrement **505** (CC) connue uniquement de l'utilisateur et de la plateforme.

L'utilisation de ce processus pour calculer l'identifiant chiffré **506** (ID*) de l'utilisateur a pour résultat de lui conférer les propriétés suivantes.

Sauf à connaitre la clé CC **505,** il est en pratique impossible pour un fournisseur à qui l'identifiant chiffré ID* **506** a été fourni de retrouver la valeur de l'identifiant initial IUU **500** à partir de l'identifiant chiffré.

En outre, sauf à connaitre la clé CC **505,** il est en pratique impossible pour ce fournisseur de service de lier deux identifiants chiffrés distincts qui lui ont été fournis à un même utilisateur, quand bien même ces deux identifiants chiffrés ont par exemple été générés par une même extension logicielle du navigateur de ce même utilisateur.

Dès lors, l'identifiant chiffré ID* **506** ne pourra pas en lui-même être utilisé comme outil de traçage des utilisateurs en ligne.

Cependant, l'identifiant chiffré ID* **506** peut être transmis par les fournisseurs de services à la plateforme qui elle, est en en mesure de retrouver l'utilisateur correspondant à l'identifiant chiffré. En effet, la plateforme centralisée maintient une liste des clés CC **505** distribuées aux utilisateurs et stockées par leurs extensions de navigateur, par exemple en fonction de la date de la requête. La plateforme peut donc par un déchiffrement **507** avec une la clé CC **505** (ou un petit nombre de déchiffrements pour essayer plusieurs clés CC candidates), inverser le processus de chiffrement appliqué et retrouver l'identifiant de l'utilisateur IUU **501,** le nombre aléatoire et la série de caractères prédéfinis invariables. Dans le cas où plusieurs clés CC sont candidates pour le déchiffrement, la présence de la série de caractères prédéfinis invariables dans le message déchiffré permet de confirmer que la bonne clé CC a été utilisée.

La plateforme peut alors faire une offre spécifique à l'utilisateur (par exemple : offre commerciale, bon d'achat, etc.), agissant comme intermédiaire entre le site visité et l'utilisateur. Ce rôle d'intermédiaire permet à la plateforme de maintenir l'anonymat de l'utilisateur vis-à-vis des fournisseurs de service, en particulier si l'utilisateur ne souhaite pas profiter de l'offre.

Pour cela, l'utilisateur se connecte de nouveau à la plateforme centralisée de confiance et prend connaissance de l'offre qui lui est adressée. S'il l'accepte l'offre, la plateforme centralisée met le site en ligne en lien avec l'utilisateur. S'il refuse l'offre, son anonymat est maintenu vis-à-vis du site en ligne.

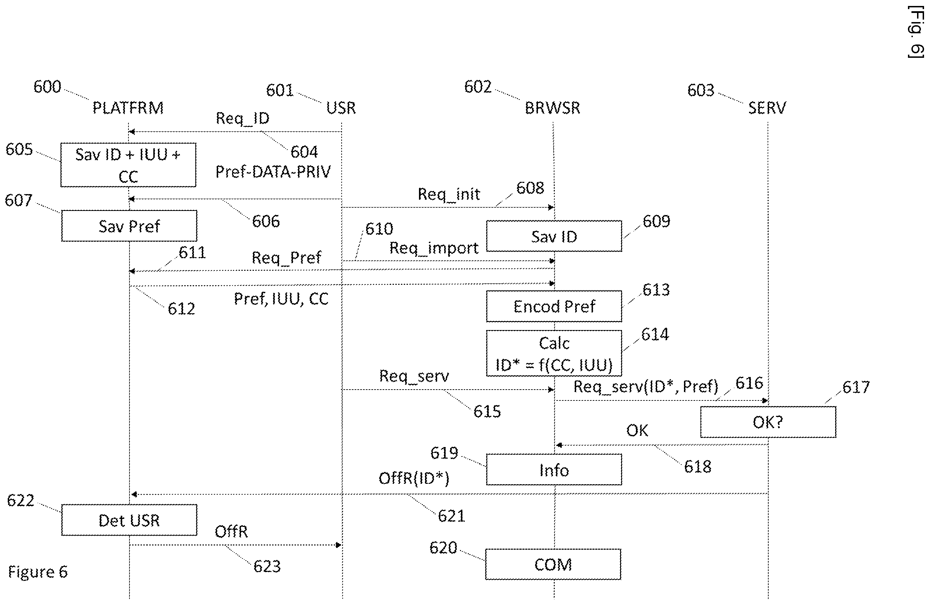

Tout ce processus est décrit dans ce qui suit en référence à la **figure 6** qui illustre schématiquement les communications entre un système distant **600** (PLATFRM) de gestion centralisée de données personnelles d'utilisateurs, un système client **601** (USR) d'un utilisateur, un module client de gestion des données personnelles **602** (BRWSR) d'un utilisateur et un système distant **603** (SERV) d'un fournisseur de service.

Le module **602** est accessible par le système client. Par exemple, il s'agit d'une extension d'un navigateur comme cela a été décrit. Il peut être intégré au système **601.** Il peut aussi s'agir d'un système distinct. Par exemple si l'utilisateur a configuré ses choix sur un système et accède au fournisseur de service avec un autre. La configuration de la **figure 6** est purement illustrative.

Le processus démarre avec une requête **604** (Req_ID) du système client **601** vers le système distant **600** pour enregistrer ses choix en matière de données personnelles lorsqu'il échange avec des fournisseurs de service. Il peut s'agir de la création d'un compte lors de laquelle un login et un mot de passe vont être demandés à l'utilisateur.

En réponse à cette requête, le système distant va notamment générer un identifiant ID, unique à l'utilisateur, lors d'une étape **605.** Le système **600** stocke cet identifiant pour reconnaître l'utilisateur. Le système peut en outre générer l'identifiant unique d'utilisateur décrit ci-avant et la clé cryptographique qui va permettre de sécuriser les échanges.

Ensuite, l'utilisateur va définir ses choix en matière de traitement de ses données personnelles lors d'une communication **606.** Par exemple, l'utilisateur peut remplir des formulaires fournis par le système **600** comme il le ferait chez un fournisseur de service classique. Cette définition peut être plus fine et précise pour s'adapter à différents cas de figure. Les choix de l'utilisateur sont ensuite stockés lors d'une étape **607**. L'utilisateur peut par exemple mettre à jour ses choix de manière régulière en se connectant au système distant **600**.

Le stockage des choix de l'utilisateur se fait selon un format qui peut être communiqué à des fournisseurs de services en ligne pour éviter à l'utilisateur d'être interrogé à chaque connexion à un système distant mettant en œuvre un tel service.

Lorsque l'utilisateur souhaite utiliser des services en ligne, il configure son outil de communication. Par exemple une extension logicielle. Celui-ci est illustré par le module **602,** auquel il fait parvenir une requête **608** d'initialisation (Req_init). Avec cette requête, l'utilisateur peut communiquer au module **602** les informations nécessaires pour communiquer avec le système distant **600,** par exemple son login et son mot de passe. Le module enregistre ces informations lors d'une étape **609.**

Lors de la première utilisation du module, ou régulièrement, l'utilisateur peut demander au module de se connecter au système **600** pour mettre à jour ses préférences. Alternativement, le module **602** peut interroger automatiquement le module **600.** Il peut le contacter de manière régulière. Il peut aussi le faire sur invitation du système **600,** lorsque par exemple une mise à jour des préférences de l'utilisateur est disponible.

Le module **602** contacte ensuite le système distant **600** au moyen d'une requête **611** (Req_import) aux fins qu'il lui communique en réponse des données **612** comprenant les choix de l'utilisateur. Ces données **612** peuvent comporter les choix tels que stockés lors de l'étape **607.** Ces informations peuvent aussi comporter l'identifiant unique IUU. Elle peut aussi comporter la clé cryptographique CC.

Le module **602** stocke ensuite les préférences lors d'une étape **613**. Lors de ce stockage, une mise en forme spécifique pour permettre de les communiquer au système distant **603** peut être réalisée. De manière optionnelle, il peut par ailleurs procéder à une étape de génération **614** d'un identifiant chiffré ID* comme cela a déjà été décrit, par exemple en référence à la **figure 5****.** Pour cela, il utilise par exemple l'identifiant unique et la clé cryptographique reçus.

Le processus se poursuit lorsque le module **602** reçoit une requête de connexion **615** (Req_serv) au système **603** du système client **601**. Par exemple, il s'agit d'une requête http de connexion à un site internet. Comme déjà expliqué, le module **602** altère la requête pour y inclure les choix de l'utilisateur en matière de traitement de ses données personnelles et son identifiant (optionnellement son identifiant chiffré). Cette requête altérée **616** (Req_serv(ID*, Pref)) est ensuite envoyée au système **603**.

Le serveur **603** analyse la requête et détermine s'il accepte les choix de l'utilisateur dans une étape **617**. Il notifie ensuite sa réponse dans un message **618,** comme cela a déjà été évoqué. Cette réponse (par exemple un témoin d'acceptation) est ensuite affichée à l'utilisateur dans une étape **619,** qui peut décider de continuer ou non sa communication avec le serveur distant dans une étape **620**.

Selon des modes de réalisation, le système **603** peut décider de transmettre au système **600** un message **621** (OffR(ID*)) contenant une offre à destination de l'utilisateur. Cette offre est accompagnée de l'identifiant de l'utilisateur. De manière optionnelle, il s'agit de l'identifiant chiffré qui ne permet pas au système **603** d'identifier ou de pister l'utilisateur mais qui va permettre au système **600** de déterminer l'identité de cet utilisateur à qui est destinée l'offre.

Sur réception du message **621,** le système **600** détermine lors de l'étape **622** l'utilisateur à qui l'offre est destinée. Cela peut se faire en déchiffrant l'identifiant chiffré, si un tel identifiant chiffré est utilisé comme cela a déjà été décrit ci-avant.

Si l'offre correspond aux choix de l'utilisateur, une communication entre le système **603** et le système client **601** est autorisée par le système **600** afin qu'elle lui soit transmise. Cette communication autorisée peut prendre la forme d'un message **623** (OffR) transmis par le système **600** au système client **601** directement comme cela est représenté ou via le module **602.** Alternativement, c'est l'utilisateur qui vient la consulter, soit de lui-même en se connectant à la plateforme ou sur invitation de celle-ci. Alternativement encore, comme illustré par la **figure 4****,** si l'offre correspond au choix de l'utilisateur, la communication autorisée peut être mise en œuvre par le système **603**. Dans ce cas, le système **600** peut envoyer un message au système **603** l'autorisant à faire son offre directement à l'utilisateur. Il peut pour cela lui transmettre les données nécessaires à cet effet. Alternativement, le système peut faire l'offre dans le cadre de la communication (étape **620**) déjà en cours avec l'utilisateur.

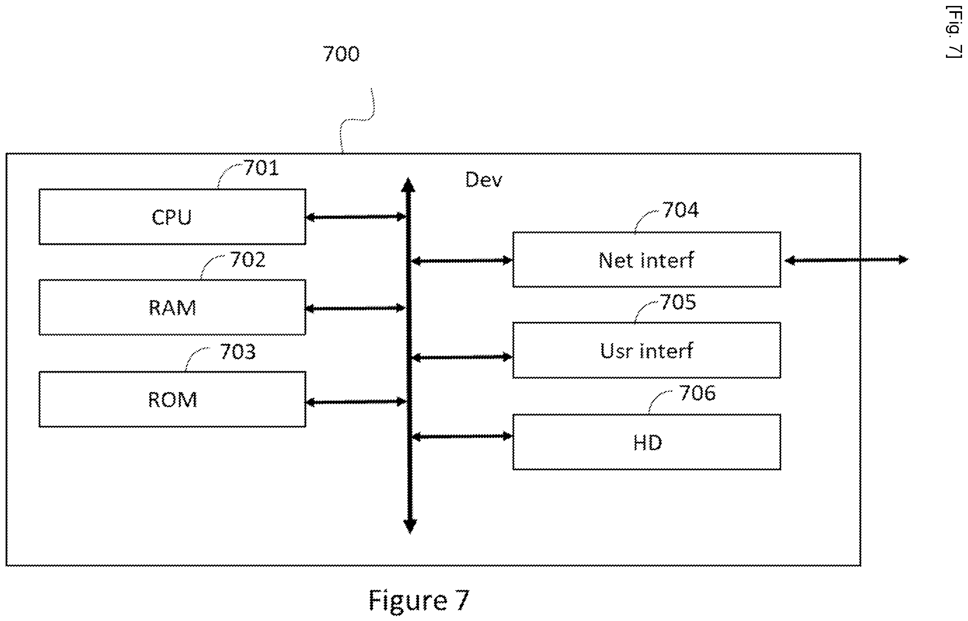

**La** **figure 7** est un schéma fonctionnel d'un système **700** pour la mise en œuvre d'un ou plusieurs modes de réalisation de l'invention. Les systèmes ou les serveurs décrits ci-dessus peuvent avoir la même structure.

Le système **700** comprend un bus de communication auquel sont connectés :
- une unité de traitement **701,** telle qu'un microprocesseur, dénommée CPU ;
- une unité de mémoire vive **702,** dénommée RAM, pour le stockage de code exécutable d'un procédé selon un mode de réalisation de l'invention ainsi que des registres adaptés pour enregistrer les variables et paramètres nécessaires à la mise en œuvre d'un procédé selon des modes de réalisation, dont la capacité mémoire peut être étendue par une RAM optionnelle connectée à un port d'extension par exemple ;
- une unité de mémoire **703,** appelée ROM, pour le stockage de programmes informatiques destinés à mettre en œuvre les modes de réalisation de l'invention ;
- une unité d'interface réseau **704** connectée à un réseau de communication sur lequel les données numériques à traiter sont transmises ou reçues. L'interface réseau **704** peut être une interface réseau unique, ou composée d'un ensemble de différentes interfaces réseau (par exemple des interfaces câblées et sans fil, ou différents types d'interfaces câblées ou sans fil). Les données sont écrites sur l'interface réseau pour la transmission ou sont lues à partir de l'interface réseau pour la réception sous le contrôle de l'application logicielle s'exécutant dans le CPU **701** ;
- une unité d'interface utilisateur graphique **705** permettant de recevoir des entrées d'un utilisateur ou d'afficher des informations à un utilisateur ;
- un disque dur **706** noté HD
- un module d'entrées/sorties E/S **707** pour recevoir/envoyer des données depuis/vers des systèmes externes tels qu'une source vidéo ou un écran.

Le code exécutable peut être stocké soit en mémoire morte **703,** soit sur le disque dur **706,** soit sur un support numérique amovible comme par exemple un disque. Selon une variante, le code exécutable des programmes peut être reçu au moyen d'un réseau de communication, via l'interface réseau **704,** afin d'être stocké dans l'un des moyens de stockage du système de communication **700,** comme le disque dur **706,** avant d'être exécuté.

L'unité centrale de traitement **701** est adaptée pour contrôler et diriger l'exécution des instructions ou des parties de code logiciel du ou des programmes selon les modes de réalisation de l'invention, ces instructions étant stockées dans l'un des moyens de stockage susmentionnés. Après la mise sous tension, l'unité de traitement **701** est capable d'exécuter les instructions de la mémoire vive principale **702** relatives à une application logicielle après que ces instructions ont été chargées à partir du programme ROM **703** ou du disque dur (HD) **706** par exemple. Une telle application logicielle, lorsqu'elle est exécutée par l'unité centrale **701,** entraîne l'exécution des étapes d'une méthode selon des incarnations.

La présente invention a été décrite et illustrée dans la présente description détaillée en référence aux figures jointes. Toutefois la présente invention ne se limite pas aux formes de réalisation présentées. D'autres variantes, modes de réalisation et combinaisons de caractéristiques peuvent être déduits et mis en œuvre par la personne du métier à la lecture de la présente description et des figures annexées.

Pour satisfaire des besoins spécifiques, une personne compétente dans le domaine de l'invention pourra appliquer des modifications ou adaptations.

Dans les revendications, le terme "comporter" n'exclut pas d'autres éléments ou d'autres étapes. L'article indéfini « un » n'exclut pas le pluriel. Les différentes caractéristiques présentées et/ou revendiquées peuvent être avantageusement combinées. Leur présence dans la description ou dans des revendications dépendantes différentes, n'exclut pas en effet la possibilité de les combiner. Les signes de référence ne sauraient être compris comme limitant la portée de l'invention.

## Revendications

1. Procédé de communication sur un réseau pour l'accès par un système client (601) à un service sur un système distant (603) comprenant les étapes suivantes :
- réception de données (612), de la part d'un système de gestion de données personnelles d'utilisateurs, lesdites données (612) comprenant au moins une définition (Pref) d'au moins un choix d'un utilisateur pour le traitement de données personnelles associées à l'utilisateur, ladite au moins une définition (Pref) étant associée à un identifiant (IUU) de l'utilisateur,
- transmission d'une requête de connexion (616) audit serveur distant (603) comprenant au moins ladite définition (Pref) associée audit identifiant (IUU) de l'utilisateur,
- établissement d'une première communication (620) entre ledit système client (601) et ledit système distant (603) pour la fourniture dudit service en fonction d'une réponse (618) dudit système distant (603) à ladite définition (Pref), et
- établissement d'une deuxième communication (623) de la part dudit système distant (603) avec ledit système client (601), ladite deuxième communication étant autorisée par ledit système de gestion (600), sur la base de ladite définition (Pref).

2. Procédé selon la revendication 1, comportant en outre la génération (614), à partir dudit identifiant (IUU) de l'utilisateur, d'un identifiant chiffré (ID*), et dans lequel, dans ladite requête de connexion (616) audit serveur distant (603), ladite définition (Pref) est associée audit identifiant chiffré (ID*).

3. Procédé selon la revendication 2, dans lequel
- ledit système distant (603) transmet audit système de gestion (600) une proposition de deuxième communication (621) associée audit identifiant chiffré (ID*), et
- ledit système de gestion (600) détermine (622) l'utilisateur à qui est destinée la dite deuxième communication à partir dudit identifiant chiffré (ID*).

4. Procédé selon l'une quelconque des revendications 2 et 3, dans lequel ledit système de gestion (600)
- génère (605) ledit identifiant (IUU) ainsi qu'une clé cryptographique (CC) pour la génération (624) de l'identifiant chiffré (ID*),
- reçoit ledit au moins un choix de l'utilisateur pour le traitement de ses données personnelles lors d'une communication (606) avec le système client (601), et
- enregistre (607) ladite au moins une définition (Pref).

5. Procédé selon l'une des revendications précédentes, dans lequel, ladite deuxième communication est établie directement entre le système de gestion (600) et le système client (601).

6. Procédé selon l'une des revendications 1 à 4, dans lequel, ladite deuxième communication est établie entre le système distant (401) et le système client (400).

7. Procédé selon l'une quelconque des revendications précédentes, dans lequel, ladite au moins une définition (Perf) est stockée (613) au sein d'un module client de gestion des données personnelles (602) accessible au système client (601).

8. Procédé selon la revendication précédente dans lequel, ladite au moins une préférence (Pref) est reçue (612) de la part du système de gestion (600) et dans lequel ledit stockage (613) comporte une mise en forme de ladite au moins une préférence pour sa transmission (616) au système distant (603).

9. Procédé selon la revendication précédente dans lequel :
- ledit système distant (603) analyse (617) ladite requête de connexion (616) pour accepter ou non ladite au moins une définition (Pref) et transmettre ladite réponse (618), et
- ledit module de gestion des données personnelles affiche (619) ladite réponse pour l'utilisateur.

10. Dispositif de communication (700) comprenant une unité de traitement (701) configurée pour la mise en œuvre d'étapes selon le procédé selon l'une quelconque des revendications précédentes.

11. Système de communication comportant :
- un système client (600),
- un système distant (603), et
- un système de gestion (600) des données personnelles d'un utilisateur du système client (600) utilisant ledit système client (600) pour accéder à un service sur ledit système distant (603),
dans lequel le système client (600), le système distant (603) et le système de gestion (600) sont configurés pour mettre en œuvre un procédé selon l'une quelconque des revendications 1 à 9.

## Patentansprüche

1. Verfahren zur Kommunikation über ein Netzwerk für den Zugriff eines Client-Systems (601) auf einen Dienst auf einem Remote-System (603), das die folgenden Schritte umfasst:
- Empfangen von Daten (612) von einem System zur Verwaltung personenbezogener Daten von Benutzern, wobei die Daten (612) mindestens eine Definition (Pref) mindestens einer Auswahl eines Benutzers für die Verarbeitung personenbezogener Daten, die mit dem Benutzer verbunden sind, umfassen, wobei die mindestens eine Definition (Pref) mit einer Kennung (IUU) des Benutzers verbunden ist,
- Übertragung einer Verbindungsanfrage (616) an den genannten Remote-Server (603), die mindestens die genannte Definition (Pref) umfasst, die mit der genannten Kennung (IUU) des Benutzers verknüpft ist,
- Aufbau einer ersten Kommunikation (620) zwischen dem Clientsystem (601) und dem Remote-System (603) zur Bereitstellung des Dienstes in Abhängigkeit von einer Antwort (618) des Remote-Systems (603) auf die Definition (Pref), und
- Aufbau einer zweiten Kommunikation (623) seitens des Remote-Systems (603) mit dem Client-System (601), wobei die zweite Kommunikation durch das Verwaltungssystem (600) auf der Grundlage der Definition (Pref) autorisiert wird.

2. Verfahren nach Anspruch 1, umfassend außerdem die Erzeugung (614) einer verschlüsselten Kennung (ID*) aus der Benutzerkennung (IUU), wobei in der genannten Verbindungsanfrage (616) an den genannten entfernten Server (603) die genannte Definition (Pref) mit der genannten verschlüsselten Kennung (ID*) verknüpft ist.

3. Verfahren nach Anspruch 2, bei dem
- das Remote-System (603) dem Verwaltungssystem (600) einen Vorschlag für eine zweite Kommunikation (621) übermittelt, der der verschlüsselten Kennung (ID*) zugeordnet ist, und
- das Verwaltungssystem (600) anhand der verschlüsselten Kennung (ID*) den Benutzer bestimmt (622), für den die zweite Kommunikation bestimmt ist.

4. Procédé selon l'une des revendications 2 et 3, dans lequel le système de gestion (600) :
- génère (605) ledit identifiant (IUU) ainsi qu'une clé cryptographique (CC) pour générer (624) l'identifiant crypté (ID*),
- reçoit ladite au moins une sélection de l'utilisateur pour le traitement de ses données à caractère personnel pendant une communication (606) avec le système client (601), et
- stocke (607) ladite au moins une définition (Pref).

5. Verfahren nach einem der vorstehenden Ansprüche, wobei die zweite Kommunikation direkt zwischen dem Verwaltungssystem (600) und dem Kundensystem (601) hergestellt wird.

6. Verfahren nach einem der Ansprüche 1 bis 4, wobei die zweite Kommunikation zwischen dem Fernsystem (401) und dem Kundensystem (400) hergestellt wird.

7. Verfahren nach einem der vorhergehenden Ansprüche, bei dem die genannte mindestens eine Definition (Pref) in einem Modul zur Verwaltung personenbezogener Daten (602) gespeichert (613) ist, das für das Client-System (601) zugänglich ist.

8. Verfahren nach dem vorhergehenden Anspruch, bei dem die genannte mindestens eine Präferenz (Pref) vom Verwaltungssystem (600) empfangen wird (612) und bei dem die genannte Speicherung (613) eine Formatierung der genannten mindestens einen Präferenz für deren Übertragung (616) an das entfernte System (603) umfasst.

9. Verfahren nach dem vorhergehenden Anspruch, bei dem:
- das genannte entfernte System (603) die genannte Verbindungsanfrage (616) analysiert (617), um die genannte mindestens eine Definition (Pref) anzunehmen oder abzulehnen und die genannte Antwort (618) zu übermitteln, und
- das genannte Modul zur Verwaltung personenbezogener Daten die genannte Antwort für den Benutzer anzeigt (619).

10. Kommunikationsvorrichtung (700) mit einer Verarbeitungseinheit (701), die zur Durchführung von Schritten gemäß dem Verfahren nach einem der vorstehenden Ansprüche konfiguriert ist.

11. Kommunikationssystem mit:
- einem Client-System (600),
- ein Fernsystem (603) und
- ein Verwaltungssystem (600) für die personenbezogenen Daten eines Benutzers des Kundensystems (600), der das Kundensystem (600) verwendet, um auf einen Dienst auf dem Fernsystem (603) zuzugreifen,
wobei das Clientsystem (600), das Fernsystem (603) und das Verwaltungssystem (600) so konfiguriert sind, dass sie ein Verfahren gemäß einem der Ansprüche 1 bis 9 implementieren.

## Claims

1. A method of communicating over a network for access by a client system (601) to a service on a remote system (603) comprising the following steps:
- receiving data (612), from a user personal data management system, said data (612) including at least one definition (Pref) of at least one choice of a user for processing personal data associated with the user, said at least one definition (Pref) being associated with an identifier (IUU) of the user,
- transmitting a connection request (616) to said remote server (603) including at least said definition (Pref) associated with said user identifier (IUU),
- establishing a first communication (620) between said client system (601) and said remote system (603) for the provision of said service based on a response (618) of said remote system (603) to said definition (Pref), and
- establishing a second communication (623) from said remote system (603) to said client system (601), said second communication being authorized by said management system (600), based on said definition (Pref).

2. A method according to claim 1, further comprising generating (614) from said user identifier (IUU) an encrypted identifier (ID*), and wherein, in said connection request (616) to said remote server (603), said definition (Pref) is associated with said encrypted identifier (ID*).

3. A method according to claim 2, wherein
- said remote system (603) transmits to said management system (600) a second communication proposal (621) associated with said encrypted identifier (ID*), and
- said management system (600) determines (622) the user for whom said second communication is intended from said encrypted identifier (ID*).

4. A method according to any of claims 2 and 3, wherein said management system (600)
- generates (605) said identifier (IUU) as well as a cryptographic key (CC) for the generation (624) of the encrypted identifier (ID*),
- receives said at least one choice from the user for processing his personal data during a communication (606) with the client system (601), and
- stores (607) said at least one definition (Pref).

5. A method according to any one of the preceding claims, wherein, said second communication is established directly between the management system (600) and the client system (601).

6. The method of any one of claims 1 to 4, wherein, said second communication is established between the remote system (401) and the client system (400).

7. A method according to any one of the preceding claims, wherein, said at least one definition (Perf) is stored (613) within a personal data management client module (602) accessible to the client system (601).

8. A method according to the preceding claim wherein, said at least one preference (Pref) is received (612) from the management system (600) and wherein said storage (613) includes formatting said at least one preference for transmission (616) to the remote system (603).

9. A method according to the preceding claim wherein:
- said remote system (603) analyzes (617) said connection request (616) to accept or not said at least one definition (Pref) and transmit said response (618), and
- said personal data management module displays (619) said response to the user.

10. A communication device (700) comprising a processing unit (701) configured to implement steps according to the method according to any of the preceding claims.

11. Communication system comprising :
- a client system (600),
- a remote system (603), and
- a system for managing (600) the personal data of a user of the client system (600) using said client system (600) to access a service on said remote system (603),
wherein the client system (600), the remote system (603), and the management system (600) are configured to implement a method according to any one of claims 1 to 9.
